# EUROPEAN PATENT APPLICATION

(11) **EP 4 756 083 A1**
(43) Date of publication of application: **10.06.2026**
(21) Application number: 25221006.7
(22) Date of filing: 05.12.2025
(51) Int. Cl.: C25D 11/02, C25D 11/18, G01N 17/00, G01N 17/02, G01N 17/04, G01N 27/416

(54) **MONITORING OF CHROMIUM (VI)-FREE ANODIZED SEALING PROCESSES AND METHODS THEREOF**

(30) Priority: 09.12.2024 US 202418974459
(71) Applicant: The Boeing Company, Arlington, VA 22202 (US)
(72) Inventor: Dixon, Carol Frances, Arlington, VA, 22202 (US); Greene, Mellyssa Ebellin, Arlington, VA, 22202 (US); Tang, Ariel Ka-Yan, Arlington, VA, 22202 (US); Badger, Jana, Arlington, VA, 22202 (US)
(74) Representative: Hoffmann Eitle

(57) **Abstract**

A method for monitoring a sealing process includes sealing a surface of an anodized substrate; passing a test anodized substrate corresponding to the anodized substrate into the same sealing process as the anodized substrate; measuring an electrochemical surface potential of a test anodized substrate that represents the surface of an anodized part using open circuit potentiometry in situ to generate electrochemical surface potential data; and analyzing the electrochemical surface potential measurement data.

## Description

### TECHNICAL FIELD

The present teachings relate generally to monitoring of anodize sealing processes and, more particularly, to the monitoring of chromium(VI)-free anodize sealing processes.

### BACKGROUND

As interest increases in the use of chromium(VI)-free post-anodize chemical seal processes for aluminum alloys, operating parameters for the technology must be defined for the process specification. Likewise, the monitoring of these operating parameters can facilitate improved quality of the chemical sealing process. Traditional industry test methods take a minimum of two weeks to provide data and are only able to track relative performance. These known methods lack immediate real-time data that gives mechanistic information on the chemical sealing process. This data could be used to inform decision-making for processing parameter optimization, that can be tailored for the processing of any given aluminum alloy. Such measurement methods could also be used for chemical seal processing tank maintenance, which can prevent downtime during production by ensuring chemical processing tanks remain in compliance with the process specification through continuous monitoring and troubleshooting.

The current approach for anodize seal process optimization is to conduct performance testing and adjust processing parameters based on this data, repeating as required. This approach provides only relative performance ranking, it does not give any real-time data. Furthermore, each cycle takes two weeks or more to generate data, and it does not provide any mechanistic information regarding the seal formation process.

Therefore, it is desirable to develop methods for providing immediate real-time data that gives mechanistic information on the chemical sealing process used in conjunction with aluminum treatment and production processes.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

A method for monitoring and optimizing a sealing process in situ is disclosed. The method includes sealing a surface of an anodized substrate, providing a test anodized substrate corresponding to the anodized substrate into the same sealing process as the anodized substrate, measuring an electrochemical surface potential of a test anodized substrate that represents the surface of an anodized part, collecting electrochemical surface potential measurement data, analyzing the electrochemical surface potential measurement data, and identifying one or more performance indicators related to seal quality and processing parameters. Other embodiments of this aspect can include corresponding computer systems, apparatus, and computer programs recorded on one or more computer storage devices, each configured to perform the actions of the methods.

Implementations of the method for monitoring and optimizing a sealing process in situ may include optimizing the sealing process using information obtained from analyzing the electrochemical surface potential measurement data, and measuring the electrochemical surface potential using a potentiostat and a reference electrode. The method for monitoring and optimizing a sealing process in situ may include measuring an electrochemical surface potential of a test anodized substrate that represents the surface of an anodized part. Measuring electrochemical surface potential of the corresponding test anodized substrate may include measuring open circuit potential (OCP) of the corresponding test anodized substrate. The method for monitoring and optimizing a sealing process in situ may include performing surface characterization on the corresponding test anodized substrate. The performing of surface characterization may include SEM/EDS cross-section imaging and glow discharge - optical emission spectrometry (GDOES). Implementations of the described techniques may include hardware, a method or process, or computer software on a computer-accessible medium.

A method for monitoring a sealing process is also disclosed. The method also includes sealing a surface of an anodized substrate, passing a test anodized substrate corresponding to the anodized substrate into the same sealing process as the anodized substrate, measuring an electrochemical surface potential of a test anodized substrate that represents the surface of an anodized part using open circuit potentiometry in situ to generate electrochemical surface potential data, and analyzing the electrochemical surface potential measurement data. Other embodiments of this aspect include corresponding computer systems, apparatus, and computer programs recorded on one or more computer storage devices, each configured to perform the actions of the methods.

Implementations of the method may include measuring the electrochemical surface potential of a test anodized substrate in a conversion coating tank. The electrochemical surface potential is measured using a potentiostat combined with a reference electrode immersed directly into a sealing solution. The method may include adjusting one or more parameters of the sealing process. The one or more parameters may include at least one selected from the group may include of sealing solution concentration, pH, temperature, deoxidation time, anodization voltage, sealing duration, rinse quality, and rinse times. The method may include characterizing a surface of the test anodized substrate using a surface characterization method. The surface characterization method may include glow discharge optical emission spectrometry (GDOES) in combination with open circuit potentiometry to analyze elemental concentrations across a sealing layer depth profile from about 1µm to about 150 µm. The substrate may include anodized aluminum or an aluminum alloy. Implementations of the described techniques may include hardware, a method or process, or computer software on a computer-accessible medium.

A system for monitoring a sealing process is disclosed, including a potentiostat. The system also includes an electrochemical cell. The system also includes a reference electrode, and where the reference electrode is immersed in a sealant solution to measure open circuit potential (OCP) of an interface between an anodized alloy surface and the sealant solution. Other embodiments of this aspect include corresponding computer systems, apparatus, and computer programs recorded on one or more computer storage devices, each configured to perform the actions of the methods.

Implementations of the system for monitoring a sealing process may include a test panel made from the anodized alloy, and where the reference electrode is immersed in proximity to the test panel. The analyzed data is used to optimize process parameters specific to a sealing process for an aluminum alloy substrate material. The reference electrode may include a standard calomel (SCE) type reference electrode. The anodized alloy may include aluminum. Implementations of the described techniques may include hardware, a method or process, or computer software on a computer-accessible medium.

The features, functions, and advantages that have been discussed can be achieved independently in various implementations or can be combined in yet other implementations further details of which can be seen with reference to the following description.

### BRIEF DESCRIPTION OF THE DRAWINGS

The accompanying drawings, which are incorporated in and constitute a part of this specification, illustrate embodiments of the present teachings and together with the description, serve to explain the principles of the disclosure. In the figures:
FIG. 1A depicts an application of a structural component including an exemplary anodized and sealed substrate applied to an aerospace vehicle. FIG. 1B is an exploded view of a portion of the aerospace vehicle of FIG. 1A, in accordance with the present disclosure.
FIG. 2 is a flowchart illustrating a process for the monitoring of an exemplary chromium (VI)-free anodized sealing processes in accordance with the present disclosure.
FIG. 3 is a schematic of an exemplary open circuit potential monitoring setup, in accordance with the present disclosure.
FIG. 4 is a plot showing an open circuit potential (OCP) profile, in accordance with the present disclosure.
FIG. 5 is a schematic of sputtering for an exemplary glow discharge - optical emission spectrometry (GDOES) measurement arrangement, in accordance with the present disclosure.

It should be noted that some details of the figures have been simplified and are drawn to facilitate understanding of the present teachings rather than to maintain strict structural accuracy, detail, and scale.

### DETAILED DESCRIPTION

Reference will now be made in detail to exemplary embodiments of the present teachings, examples of which are illustrated in the accompanying drawings. Wherever possible, the same reference numbers will be used throughout the drawings to refer to the same, similar, or like parts.

The present disclosure provides immediate real-time data that gives mechanistic information on chemical sealing processes. This data can be used to inform decision-making for processing parameter optimization, that can be tailored for the processing of any given aluminum alloy. The methods and processes of the present disclosure can also be used for chemical seal processing tank maintenance, which can prevent downtime during production by ensuring chemical processing tanks remain in compliance with the process specification through monitoring and troubleshooting.

The present disclosure provides measuring the evolution of the electrochemical surface potential of a test coupon in situ as it undergoes the sealing process in full-immersion conditions after anodizing, corresponding to actual substrates or parts undergoing the same procedure. A commercially available potentiostat, calomel reference electrode, and electrochemical cell can be used to make the measurements. Measurements are made using the solution of interest, and a test coupon of the relevant alloy that has undergone any relevant pretreatments such that it is a true representation of a corresponding part. Data can be analyzed using commercial electrochemical control and analysis software. The use of this equipment for the methods of the present disclosure can be operated using the actual seal solution obtained directly from a chemical processing tank. Furthermore, the test specimen can also receive the full pretreatment on the processing line corresponding with actual parts. The traditional use of this equipment is used with ex situ experimentation using a specimen that has been fully processed in advance of testing, and a test solution representative of an in-service environment, such as aqueous sodium chloride, is used.

The present teachings provide a method and tool to monitor an electrochemical Cr(VI)-free post-anodize sealing process in situ to generate real-time data, comprising measuring the electrochemical surface potential of a test coupon as it undergoes the sealing process in full-immersion conditions after anodizing. Measurement is conducted either in the conversion coating tank, or in an electrochemical cell using a potentiostat and a reference electrode. The data is analyzed using electrochemical control and analysis software. Open circuit potential (OCP) monitoring provides: (1) Optimization of the process parameters specific to any given aluminum substrate, and (2) Troubleshooting in production chemical processing tanks.

The current approach for optimizing example anodize seal processes is to process a test panel through the tank line, and then place the test panel in a salt spray chamber for a 2-week cycle time. This approach does not provide real-time data and only tracks relative performance across production batches or productions timeframes. The current approach includes conducting such performance testing and adjusting processing parameters based on this data, repeating as required. Again, this approach provides only relative performance ranking, and it does not provide any real-time data, with each cycle takes two weeks or more to generate data, and it does not give any mechanistic information regarding the seal formation process.

A method and tool as described herein can be utilized to monitor the performance of a chemical sealing tank line trivalent chromium conversion processes to provide real-time feedback. The described method uses industry standard tests in combination with open circuit potential (OCP) vs. time measurements and surface characterization to build a database to enable OCP monitoring to be used as a stand-alone performance indicator.

The selection and optimization of a commercial off the shelf (COTS) Cr(VI)-free post-anodize chemical seal process for aluminum alloys includes the aforementioned deficiencies. Furthermore, operating parameters for the technology must be defined for the process specification. Traditional industry test methods take a minimum of two weeks to provide data and are only able to track relative performance. The proposed method provides immediate real-time data that gives mechanistic information on the chemical sealing process. This data is used to inform decision-making for processing parameter optimization, that can be tailored for the processing of any given aluminum alloy. The method and tools described herein can also be used for chemical seal processing tank maintenance, which can prevent downtime for production processes by ensuring chemical processing tanks remain in compliance with the process specification through monitoring and troubleshooting.

The invention measures the evolution of the electrochemical surface potential of a test coupon in situ as it undergoes the sealing process in full-immersion conditions after anodizing. During trivalent chromium processes (TCP), the sealing process is used to seal anodized surfaces to enhance corrosion protection to anodized parts. This has typically been done with either hot water or using a dilute hexavalent chromium seal. A TCP seal forms a 'cap' or encapsulation over and on the surface of an anodized layer, penetrating the porous anodized structure to a depth of up to approximately 1 micron. Within this depth, a gradient of chromium, zinc and potentially other compositions can be observed with the use of energy dispersive spectrometry (EDS) of cross-sectional samples. In combination with OCP testing, as described herein, scanning electron microscopy (SEM) imaging can determine if this occurs at shorter seal immersion times, in which case, the corresponding OCP profile will then be adequate to correlate performance. For example, OCP and depth of penetration can then be correlated.

A commercially available potentiostat, calomel reference electrode, and electrochemical cell are used to make the measurements. Measurements are made using the sealing solution of interest, and a test coupon of the relevant alloy that has undergone any relevant pretreatments such that it is a true representation of a part. Data is analyzed using commercial electrochemical control and analysis software. The use of this equipment for the invention is unique in that it is operated using the actual seal solution obtained directly from a chemical processing tank. Furthermore, the test specimen will receive a full pretreatment on the processing line. A typical process up to this point can include cleaning followed by rinsing, a deoxidation or etch step followed by rinsing, an anodization process once again followed by rinsing. Next a sealing steo is conducted, where the OCP monitoring occurs. The traditional use of this equipment is ex situ experimentation using a specimen that has been fully processed in advanced of testing, and a test solution representative of an in-service environment (such as aqueous sodium chloride) is used. Test panels go through the following chemical tank line processing steps, on either a pilot or production scale, prior to open circuit potential (OCP) measurement, which takes place in an electrochemical cell containing the TCP seal.

The proposed method provides immediate mechanistic information pertaining to an individual sealing process, rather than, as in existing solutions requiring multiple tests that can only provide performance ranking relative to other processing conditions. The prior solutions also take multiple weeks to generate data and must be repeated until process optimization is achieved. The use of a commercially available potentiostat, reference electrode, electrochemical cell and electrochemical control and analysis software are used to make the measurements. Measurements are made using the solution or process of interest. The test coupon used, and any chemical pretreatment processes, are also representative of the part to be processed, and therefore, correspond to the part being processed.

In addition to process optimization, the methods of the present teachings can be used to maintain the chemistry and operating parameters of an anodize seal tank when implemented in a chemical processing tankline. The method and procedures can serve as a tool to select parameters for specific alloys and troubleshoot issues with pretreatments for that material. The method can be used in pilot-scale laboratory testing, and for chemical tankline maintenance to provide immediate real-time data that is used to inform decision-making on optimization of processing parameters relevant for the processing of any given alloy. The method can further provide cost savings by expediting the optimization process and enabling an understanding of the chemical sealing process for more robust decision making, while ensuring chemical processing tanks remain in compliance with the process specification through process monitoring and troubleshooting. Production processes can be streamlined by tailoring processing times for specific alloys to minimize rework.

The anodize seal process involves cleaning panels or parts using a solvent wipe or other cleaning method, followed by racking for the chemical tank line process. Racked panels can then be sequentially immersed in a series of tanks and held for a predetermined amount of time in each one. The processes associated with these tanks are cleaning, deoxidizing, anodizing, and sealing. Thorough rinsing is carried out in-between each of these other steps by immersion in a specific rinse tank relevant to the previous process. Panels can then be air dried or dried in a heater at a temperature at or below 160°F. Various structural elements and substrates that can be used in aerospace vehicles are processed in this manner to improve adhesion and corrosion resistance.

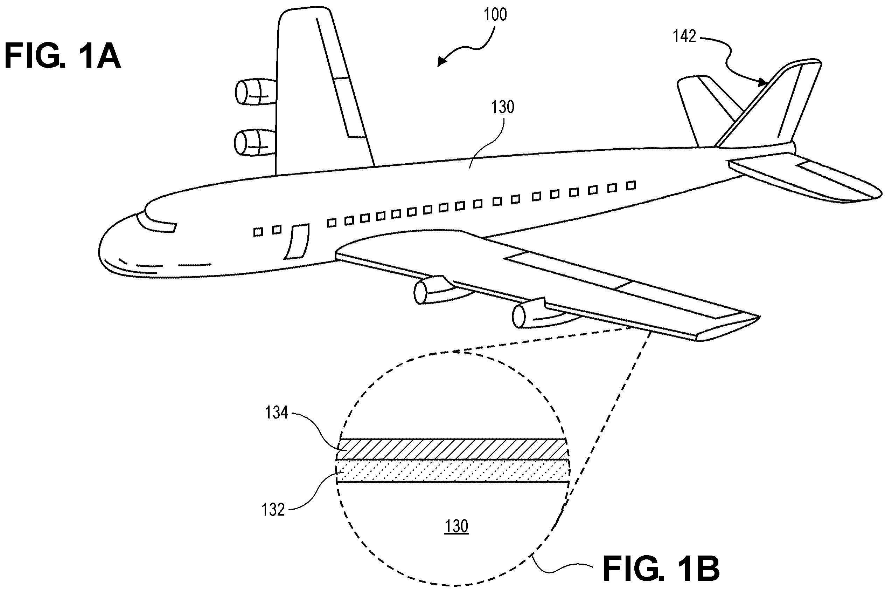

FIG. 1A depicts an application of a structural component including an exemplary anodized and sealed substrate applied to an aerospace vehicle. FIG. 1B is an exploded view of a portion of the aerospace vehicle of FIG. 1A, in accordance with the present disclosure. An application of the presently disclosed method is shown on an aerospace vehicle 100, whereby vehicle substrate 130 is applied with the presently disclosed anodized and sealed substrate. Exploded view FIG. 1B is shown, having vehicle substrate 130 or surface thereof with a substrate anodized layer 132 and a sealing layer 134 on a surface of the substrate 130, and/or onto a structural component of or onto a portion of a vehicle. In one example the application of the presently disclosed coating composition is directed to an external surface of the aerospace vehicle 100. In examples, additional coating layers, such as paints, coatings, or other protective coatings can be applied upon the anodized layer 132 and sealed layer 134. While an exemplary example of an external substrate or surface of the aerospace vehicle 100 is shown herein, it is intended as a non-limiting example. There may further be other structural applications or areas in an aerospace vehicle 100 or other structure or vehicle where anodized and sealed substrates may be used.

Substrates of the present disclosure can include a metallic substrate, such as aluminum or alloys thereof, for example, aluminum alloy from 1000 up to and including 8000 series.

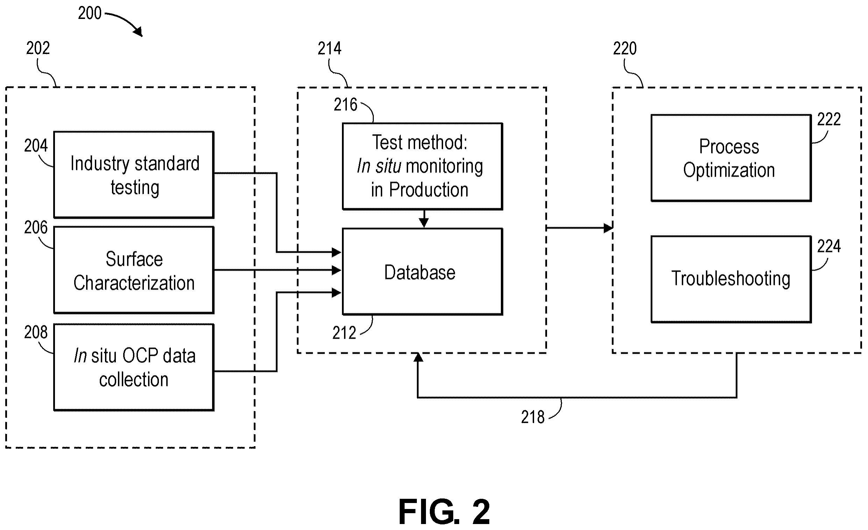

FIG. 2 is a flowchart illustrating a process for the monitoring of an exemplary chromium (VI)-free anodized sealing processes in accordance with the present disclosure. The method for monitoring and optimizing a sealing process in situ 200 includes a data collection phase 202, the formation and management of a database, in situ monitoring 214 of open circuit potential (OCP) in production sealing processes, and an analyzing and optimizing phase 220 of the method for monitoring and optimizing a sealing process in situ 200. During a data collection phase 202, while sealing a surface of an anodized substrate in a production setting, a test anodized substrate corresponding to the anodized substrate is provided into the same sealing process as the anodized substrate. This test anodized substrate is evaluated by measuring an electrochemical surface potential or open circuit potential of the anodized substrate that represents the surface of an anodized part substrate 208, collecting electrochemical surface potential measurement data and feeding or adding these tests and other industry standard testing 204 and surface characterization 206 protocols into a database 212. For example, only the test coupon would be measured during the method. In examples, measuring OCP 214 by in situ OCP monitoring in production 216 are conducted and added back into the database 218. During an analyzing and optimizing phase 220, the process is further optimized 222 and troubleshooting 224 is also conducted based on information in the database 212 and the resulting analyzing and optimizing phase 220 of the relevant information in the database 212. In the analyzing and optimizing phase 220, analyzing the electrochemical surface potential measurement data and identifying one or more performance indicators related to seal quality and processing parameters is completed. Optimization of the sealing process can be conducted using information obtained from analyzing the electrochemical surface potential measurement data.

In examples of the method for monitoring and optimizing a sealing process in situ, measuring the electrochemical surface potential can be done using a potentiostat and a reference electrode. Measurement of the electrochemical surface potential can be done for a test anodized substrate that represents the surface of an anodized part. More specifically, measuring electrochemical surface potential of the corresponding test anodized substrate includes measuring open circuit potential (OCP) of the corresponding test anodized substrate as the sealing process evolves. Other surface characterization 206 can be conducted, which can include capturing and evaluating scanning electron microscope images along with energy dispersive x-ray spectroscopy (SEM/EDS) on cross-section images and glow discharge optical emission spectrometry (GDOES), which will be described in further detail herein.

It should be noted that in monitoring the sealing process, while sealing a surface of an anodized substrate, a test anodized substrate corresponding to the anodized substrate is passed into the same sealing process as the anodized substrate. The measuring of electrochemical surface potential of a test anodized substrate that represents the surface of an anodized part using open circuit potentiometry in situ can be used to generate electrochemical surface potential data to enter into the database and serve as a basis to gather and store electrochemical surface potential measurement data and other data collected during the sealing process for later evaluation, optimization and troubleshooting of the sealing process. The measurements, in examples, can be conducted in a conversion coating tank using an open circuit potentiostat and reference electrode immersed directly into a sealing solution. The database and information gathered therefrom can serve to inform adjusting one or more parameters of the sealing process. The one or more parameters of the sealing process can include at least one of sealing solution concentration, pH, temperature, deoxidation time, anodization voltage, sealing duration, rinse times, rinse quality (i.e. the quality of the deionized water, or of the process bath), or combinations thereof.

When surface characterization methods such as glow discharge optical emission spectrometry (GDOES) are employed in combination with open circuit potentiometry it is possible analyze elemental concentrations across a sealing layer depth profile from about 1µm to about 150 µm. Example alloys used in the described anodizing processes, sealing processes, and monitoring processes can include aluminum or an aluminum alloys. Aluminum substrates primarily. In addition to aluminum and aluminum alloys thereof may also be applicable.

Systems for monitoring a sealing process as described herein can include a potentiostat, an electrochemical cell, and at least one reference electrode and wherein the at least one reference electrode is immersed in a sealant solution to measure open circuit potential (OCP) of an interface between an anodized alloy surface and the sealant solution. In examples, at least one reference electrode is immersed in proximity (approx. 1 cm) to a test panel. The system can also include a computer-readable medium storing software configured to store or analyze data from the potentiostat and at least one reference electrode, and wherein the analyzed data is used to optimize process parameters specific to a sealing process for an aluminum alloy substrate material. Where other testing methods or surface characterization methods are used in the system, the data or images or other information generated by these methods or protocols are also stored and/or analyzed by the computer-readable medium storing software. At least one reference electrode can include a standard Calomel (SCE) type reference electrode.

Industry standard testing can include neutral salt spray corrosion testing and wet and/or dry adhesion testing. Surface characterization methods can include SEM cross-sectional imaging, glow-discharge optical emission spectroscopy (GDOES), and the aforementioned in situ OCP data collection. The open circuit potential (OCP) monitoring produces a potential vs. time profile, which can be combined with other noted testing methods to establish a standard process database that can identify features on the profile that can be used as performance indicators and be used for root cause analysis (RCA) of issues or properties of the sealing process. The methods and systems including OCP monitoring can provide a means of optimization of the process parameters specific to any given aluminum substrate, inform and guide troubleshooting in production sealing processes, and provide faster turnaround of information and results, providing information in less than 1 day, as compared to current benchmarks of over two weeks for current neutral salt spray testing.

The open circuit potential (OCP) is evaluated at the interface between an anodized aluminum alloy and a trivalent chrome process (TCP) seal solution and can be measured in situ, as a function of time. Test panels can be fully immersed in solution, and measurements are made using a refence electrode and a potentiostat. These measured electrochemical interactions - including dissolution and film-build - occur at the interface between the anodized surface and TCP seal solution. A standard Calomel reference electrode (SCE) is used to measure the OCP vs. immersion time. In some examples, measurements could be conducted by Ag/AgCl (silver/silver chloride), Hg/HgO (mercury/mercury oxide), Cu/CuSO4 (copper/copper sulphate), standard hydrogen electrode (SHE), or combinations thereof.

In examples, corresponding 2-inch x 2-inch test panels are exposed to TCP seal solution through an opening, sealed with an o-ring, in an electrochemical flat cell, which includes the standard Calomel (SCE) reference electrode and the TCP seal solution. These test panels go through the standard chemical tank line processing steps prior to or during OCP measurement in an electrochemical cell containing the TCP seal.

In examples, the database built using industry standard testing, surface characterization and open circuit potential (OCP) data enables real-time optimization of process parameters by correlating OCP values with performance indicators like film thickness, porosity, chemical composition. This allows operators to adjust processing conditions in response to changes detected during production.

Exemplary reference electrodes are employed directly within the chemical processing tank line for continuous monitoring and control over seal quality. By integrating this technology into existing manufacturing lines, real-time process optimization becomes possible without interrupting or slowing down production processes.

Furthermore, various examples of OCP analysis may be combined to provide comprehensive insights into sealing performance. For instance, combining slope changes with inflection points may indicate optimal processing conditions for a specific aluminum alloy substrate. Similarly, correlating peak values in the potential vs time profile with surface characterization data (e.g., film thickness) enables operators to adjust process parameters based on actual seal quality.

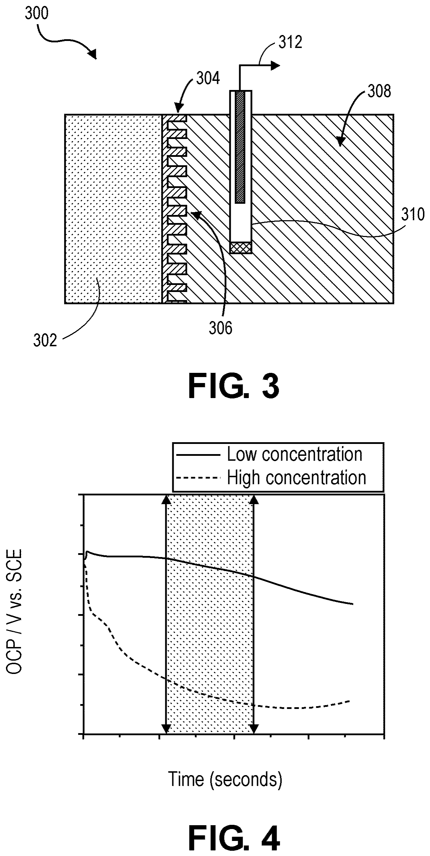

FIG. 3 is a schematic of an exemplary open circuit potential monitoring setup, in accordance with the present disclosure. The open circuit potential (OCP) can be measured at an interface between an anodized aluminum alloy and a TCP seal solution and can further be measured in situ, as a function of time. Test panels are fully immersed in solution, and measurements are made using a standard refence electrode with a potentiostat. The open circuit potential monitoring setup 300 as shown includes an aluminum alloy 302, having an anodized layer 304. The measurement method surveys electrochemical interactions, such as dissolution and film-build, that occur at an interface 306 between the anodized layer 304 at the surface and the TCP seal solution 308. The measurement is conducted using a reference electrode 310, such as a Calomel electrode, also known as a standard Calomel reference electrode (SCE) connected to a potentiostat 312 to measure the OCP vs. immersion time.

Measuring electrochemical surface potential using a potentiostat and reference electrode within an electrochemical cell as shown can be a useful approach for monitoring anodize seal processes in situ to generate real-time data. The setup allows for precise control over processing conditions such as temperature (e.g., 20°C ±1%, or 80°C with precision thermocouple), pH level (±0.01 units), and solution concentration (% w/v). For example, a test coupon may be immersed in a TCP sealant containing trivalent chromium at concentrations ranging from 5% to about 45%, or from about 10% to about 30% by weight. Exemplary solutions used can have a pH in the range of 3 to 4, and operate at a temperature from about 35 to about 45°C.

In one example, the electrochemical cell can be configured to accommodate multiple coupons simultaneously for batch testing or sequential processing of different materials. The reference electrode ensures accurate potential measurements against a known standard (e.g., Ag/AgCl), while the potentiostat controls and records changes in surface potential over time with high precision (<1 mV). This setup enables real-time monitoring of electrochemical interactions between anodized aluminum alloys and TCP seal solutions, allowing for optimization of processing parameters specific to any given substrate.

In another example, a temperature-controlled chamber can be integrated into or around the electrochemical cell to maintain precise thermal conditions during measurement. For instance, this may be achieved using thermoelectric modules or precision heating/cooling systems (±0.1°C). This feature enables testing under various environmental scenarios that may affect seal formation and surface potential.

In yet another example, a microelectrode array can used in conjunction with the potentiostat to measure localized electrochemical activity at specific points on the test coupon's surface. This allows for spatially-resolved analysis of film growth rates, porosity distribution, or other properties that influence sealing performance. The distance between measurement points is typically between 0.1 mm and 100 mm.

As noted herein, data processing software can be employed to analyze OCP profiles and extract additional information about seal quality, such as changes in slope indicative of dissolution reactions or inflection points signifying the onset of film formation. This enables real-time monitoring of process control parameters like temperature, pH level, solution concentration, anodization voltage, sealing duration, etc., which may be adjusted accordingly to optimize processing conditions.

In examples, an alternative electrode design may be employed instead of calomel reference electrodes, such as Ag/AgCl, Cu/SO₄ or Hg/HgO. This could require further validation or qualification testing to ensure compatibility with this specific application. The electrochemical cell can be constructed using materials that are compatible with the TCP solution and may withstand high temperatures up to 80°C or higher as needed without compromising measurement accuracy.

In a further embodiment, multiple test coupons may be measured simultaneously in separate compartments within an arrayed-electrode design or by rotating the single coupon through different processing conditions before measuring. This approach enables simultaneous monitoring of various process parameters while minimizing variations between samples and ensuring consistent results. The testing of multiple test coupons, measured simultaneously using this method can capture the effects of processing conditions on OCP profiles over time. This also allows for direct comparison between different process parameters or substrate materials, enabling optimization strategies tailored specifically to individual aluminum alloys.

In examples, optimization of OCP measurements for TCP seal processes on aluminum or other alloys, multiple readings can be conducted over a period of at least 30 minutes to capture initial film formation stages and subsequent changes in surface potential. In examples, measurements of OCP values at regular intervals over a specified time period, typically ranging from 30 minutes to several hours can be conducted. Commercial electrochemical analysis software packages like Gamry Frameworks or NOVA, or those provided by Gamry Instruments, and Metrohm, may be used to analyze the data from these measurements.

In another example, an automated system may integrate the calomel reference electrode with other sensors for real-time monitoring of temperature, pH, conductivity, and dissolved oxygen levels within the TCP solution during processing. Such an integrated setup enables continuous optimization of process parameters in response to changes detected by each sensor or OCP measurement data from multiple test coupons. In examples, automation would be as a result of the electrode and sensors taking continuous measurements, and the software generating and/or providing information for tank maintenance/adjustment requirements based on feedback from the database. In another example, an electrochemical cell may be designed as part of a larger system for real-time monitoring on production lines using sensors and software that may detect deviations from optimal conditions during processing.

To ensure accurate and reliable data collection, various embodiments of this method involve using different types of reference electrodes, such as Calomel (SCE), Ag/AgCl, Hg/HgO, or others. The choice of electrode depends on specific application requirements, including compatibility with solution composition, temperature range, and desired level of precision.

FIG. 4 is a plot showing an open circuit potential (OCP) profile, in accordance with the present disclosure. In general, an open circuit potential (OCP) profile provides data related to the net potential of competing reactions. For example, a negative slope can indicate that, in a given process, dissolution is the dominant reaction. Alternatively, a positive slope can show that film-build is the dominant reaction within a process. Particular features can be observed for each profile which are affected by internal conditions such as solution concentration, pH, temperature, or external conditions like any processing prior to sealing, such as deoxidation steps (deox), anodize, or rinsing conditions. The open circuit potential (OCP) vs. time plot of FIG. 4 shows the evolution of potential during the trivalent chromium seal process at different concentrations, the shaded area bounded by vertical arrows gives the optimum seal times. It should be noted that for a given process and set of conditions, this window, as well as the slopes and shapes of the OCP vs. SCE curve over time may be different. Using an evolving database of such data, the features and OCP values measured at specific times along the profile can be used to assign a performance ranking and understand the quality of the TCP seal, which will indicate what actions need to be taken in terms of process control.

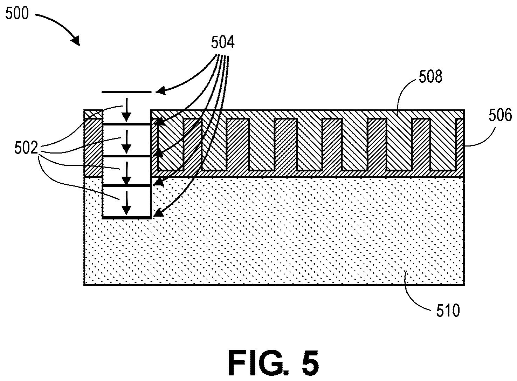

FIG. 5 is a schematic of sputtering for an exemplary glow discharge - optical emission spectrometry (GDOES) measurement arrangement, in accordance with the present disclosure. The depth profiling measurement 500 shows a cross-section of a metal alloy part 510, for example, aluminum alloy, is shown, with an anodized layer 506 having a TCP seal layer 508 incorporated therein. The measurement is conducted with a sputtering 502 or material removal step, followed by a glow discharge - optical emission spectrometry (GDOES) measurement 504. This measurement proceeds several times throughout a depth of the anodized layer 506 to provide a composition of one or more elements, in this case, metals, as the depth is penetrated further. This method can further enhance data analysis capabilities, as various examples of the method of the present disclosure involve combining OCP profile features with surface characterization methods like SEM/EDS cross-section imaging or GDOES measurements up to 150 um resolution (1 µm). This integrated approach provides a comprehensive understanding of seal formation processes by correlating electrochemical interface behavior with physical properties such as film thickness, porosity, or chemical composition. Other examples can include cross-sectional SEM imaging and focused ion beam - transmissive electron microscopy (FIB-TEM).

In addition to optimizing process parameters for specific aluminum alloys, this method may also be used in production environments where real-time monitoring and troubleshooting can provide additional performance details. By integrating the OCP measurement setup into a larger system or tank line monitoring station, operators may quickly identify deviations from optimal conditions or defects indicative of seal quality issues, enabling prompt corrective actions that reduce downtime.

The analysis of OCP profiles for features and values that indicate and can be correlated to performance ranking, troubleshooting or process control actions needed is a useful aspect of this technology. This involves plotting potential vs time profiles under various processing conditions to identify specific characteristics indicative of seal quality and optimal operating parameters. For instance, changes in slope may signify the onset of film formation, while inflection points may represent useful stages in the sealing reaction. Peak values or plateaus within these curves may indicate stable states achieved during process optimization.

In one example, a software package such as CorrosionPro can be used to analyze OCP data by plotting potential vs time profiles for different processing conditions and identifying specific features that correlate with seal quality indicators like film thickness, porosity, chemical composition of the formed layer. This enables real-time monitoring and control over process parameters during actual manufacturing operations.

In another example, a combination of surface characterization methods such as SEM/EDS cross-section imaging and GDOES can be employed to understand seal formation processes in conjunction with OCP data analysis. By analyzing features like film thickness, porosity, chemical composition of the formed layer, operators may identify optimal processing conditions for specific aluminum alloys or substrates.

In examples, a weight % of zirconium (Zr) or chromium (Cr) as a function of apparent depth, as measured by glow discharge - optical emission spectrometry (GD-OES), in a similar manner as the measurement set up depicted in FIG. 5. This measurement can be used to characterize the evolution of film-formation at specific immersion times, processing conditions, or other parameters as to their influence on the presence of various metals, such as Cr and Zr, as shown. This particular surface characterization method can be used to understand the seal formation process to feed into the database and correlate to the OCP and other data collected. While the data generated can indicate an increase or decrease in both Cr and Zr, this may not necessarily reflect the data obtained in every process, and other metals may be detected, and in other weight percentages or relative compositions depending on the process or materials being evaluated or measured. In examples, characterization methods can include SEM/EDS cross section imaging, glow discharge optical emission spectrometry, or combinations thereof, where the glow discharge optical emission spectrometry capable of measurements of depth profiles from about 1 µm to about 150 µm.

The creation of a database with the system and methods of the present disclosure using industry standard testing, surface characterization and open circuit potential data to enable OCP monitoring to be used as a stand along performance indictor are provided. The in situ testing of OCP can be done either in an electrochemical cell, or as a set-up where a reference electrode is employed directly in the chemical processing seal tank.

With the replacement of chromium (VI) or hexavalent chrome coatings with chromium (III) or trivalent chrome, further industry standard testing and evaluation of coating processes is warranted. In particular, the evaluation of related chemical processes during sealing and the establishment of a database, and analysis software having a suitable interface and coordinated with the sealing process provides a method and system for tank optimization. Parameters such as immersion time, other process parameters for candidate or unknown materials can be investigated and controlled to a higher degree. The sealing processes used in improving the corrosion resistance and adhesion of metal substrates can also be improved and further quantified. In some examples, non-anodized processes using conversion coatings could be applicable as well.

While the present teachings have been illustrated with respect to one or more implementations, alterations and/or modifications may be made to the illustrated examples without departing from the spirit and scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope and spirit of the present teachings being indicated by the following claims.

Further, the disclosure comprises examples according to the following clauses:
Clause 1. A method for monitoring (214) and optimizing a sealing process in situ, comprising:
   sealing a surface of an anodized substrate (130);
   providing a test anodized substrate (130) corresponding to the anodized substrate (130) into the same sealing process as the anodized substrate (130);
   measuring an electrochemical surface potential of a test anodized substrate (130) that represents the surface of an anodized part;
   collecting electrochemical surface potential measurement data;
   analyzing the electrochemical surface potential measurement data; and identifying one or more performance indicators related to seal quality and processing parameters.
Clause 2. The method for monitoring (214) and optimizing a sealing process in situ of Clause 1, further comprising optimizing the sealing process using information obtained from analyzing the electrochemical surface potential measurement data.
Clause 3. The method for monitoring (214) and optimizing a sealing process in situ of one of Clause 1 - 2, wherein measuring the electrochemical surface potential using a potentiostat (312) and a reference electrode (310).
Clause 4. The method for monitoring (214) and optimizing a sealing process in situ of one of Clause 1 - 3, further comprising measuring an electrochemical surface potential of a test anodized substrate (130) that represents the surface of an anodized part.
Clause 5. The method for monitoring (214) and optimizing a sealing process in situ of one of Clause 1 - 4, wherein measuring electrochemical surface potential of the corresponding test anodized substrate (130) comprises measuring open circuit potential, OCP (214) of the corresponding test anodized substrate (130).
Clause 6. The method for monitoring (214) and optimizing a sealing process in situ of one of Clause 1 - 5, further comprising performing surface characterization (206) on the corresponding test anodized substrate (130).
Clause 7. The method for monitoring (214) and optimizing a sealing process in situ of Clause 6, wherein the performing of surface characterization (206) comprises SEM/EDS cross-section imaging and glow discharge - optical emission spectrometry, GDOES.

## Claims

1. A method for monitoring (214) a sealing process, comprising:
sealing a surface of an anodized substrate (130);
passing a test anodized substrate (130) corresponding to the anodized substrate (130) into the same sealing process as the anodized substrate (130);
measuring an electrochemical surface potential of a test anodized substrate (130) that represents the surface of an anodized part using open circuit potentiometry in situ to generate electrochemical surface potential data; and
analyzing the electrochemical surface potential measurement data.

2. The method of claim 1, further comprising measuring the electrochemical surface potential of a test anodized substrate (130) in a conversion coating tank.

3. The method of one of claims 1 - 2, wherein the electrochemical surface potential is measured using a potentiostat (312) combined with a reference electrode (310) immersed directly into a sealing solution.

4. The method of one of claims 1 - 3, further comprising adjusting one or more parameters of the sealing process.

5. The method of claim 4, wherein the one or more parameters comprise at least one selected from the group consisting of sealing solution concentration, pH, temperature, deoxidation time, anodization voltage, sealing duration, rinse quality, and rinse times.

6. The method of one of claims 1 - 5, further comprising characterizing a surface of the test anodized substrate (130) using a surface characterization (206) method.

7. The method of claim 6, wherein the surface characterization (206) method comprises glow discharge optical emission spectrometry (GDOES) in combination with open circuit potentiometry to analyze elemental concentrations across a sealing layer (134) depth profile from about 1µm to about 150 µm.

8. The method of one of claims 1 - 7, wherein the substrate (130) comprises anodized aluminum or an aluminum alloy (302).

9. A system for monitoring (214) a sealing process, the system comprising:
a potentiostat (312);
an electrochemical cell; and
a reference electrode (310); and
wherein the reference electrode (310) is immersed in a sealant solution to measure open circuit potential, OCP, (214) of an interface (306) between an anodized alloy surface and the sealant solution.

10. The system for monitoring (214) a sealing process of claim 9, further comprising:
a test panel made from the anodized alloy; and
wherein the reference electrode (310) is immersed in proximity to the test panel.

11. The system for monitoring (214) a sealing process of one of claims 9 - 10, further comprising:
a computer-readable medium storing software configured to analyze data from the potentiostat (312) and at least one reference electrode (310); and
wherein the analyzed data is used to optimize process parameters specific to a sealing process for an aluminum alloy (302) substrate (130) material.

12. The system for monitoring (214) a sealing process of one of claims 9 - 11, wherein the reference electrode (310) comprises a standard Calomel, SCE, type reference electrode (310).

13. The system for monitoring (214) a sealing process of one of claims 9 - 12, wherein the anodized alloy comprises aluminum.
